# EUROPEAN PATENT SPECIFICATION

(11) **EP 1 928 207 B1**
(45) Date of publication and mention of the grant of the patent: **01.01.2014**
(21) Application number: 06124903.3
(22) Date of filing: 28.11.2006
(51) Int. Cl.: H04R 1/34, H04R 19/02, G01S 3/801, G01S 3/802

(54) **A device for generating dispersed sound waves**
Vorrichtung zur Erzeugung von gestreuten Schallwellen
Dispositif permettant de générer des ondes sonores dispersées

(43) Date of publication of application: 04.06.2008
(73) Proprietor: Leka Stillfilm, 722 41 Västeras (SE)
(72) Inventor: Karlsson, Leif, 722 41 Västerås (SE)
(74) Representative: Eurenius, Karin Lisa Maria

(56) References cited:
- EP-A- 1 137 318
- US-A- 5 280 457
- US-A1- 2004 228 215
- US-A1- 2006 056 274

## Description

### FIELD OF THE INVENTION

The present invention relates to a device for generating dispersed sound waves.

Such a device is useful in applications that require sound waves with a large dispersion angle, such as a loud speaker or a position detector. The invention is particularly useful for determining the position of a mobile point in a room.

The invention also relates to an apparatus for determining positions in a room, including a device for generating distributed sound waves according to the invention.

### PRIOR ART

Sound waves can, for example, be generated by a point sound source or a plane sound source. A point sound source radiated sound waves uniformly in all directions. The sound will be spread out spherically. The effect, i.e. the sound pressure level, of the sound waves at a distance from the sound source will depend on the surface area of the sphere, the distance from the sound source and the frequency of the sound source. Due to difficulties in connection with increasing the surface area of the sound source, the effect of the sound waves at a large distance from a point sound source will be relatively low. With a large distance is meant in the order of 3-10 meter. However, some applications require sound waves of a high effect at a large distance from the sound source. In order to increase the area of a point sound source, the mass of the emitter has to be increased. This will cause manufacturing problems. Another problem that will occur if the mass is increased is that the transient time for the emitter is increased.

A plane sound source, having a large area in relation to the wave length of the sound, generates sound waves having an essentially plane wave front, which means that the sound waves are distributed in mainly in one direction. For a plane sound source, the sound intensity level will be independent on the distance from the sound source assuming that there is no loss in acoustic energy. Thus, the effect at a point in room will only depend on the surface area of the sound source. An example of a plane sound source, having a large area in relation to the wavelength of the sound, is an electrostatic transducer. For example, a single-ended electrostatic transducer comprises two electrically conducting layers, also denoted diaphragms; a static diaphragm, and a movable diaphragm arranged movable relative to the static diaphragm. The electrostatic transducer further comprises a power supply applying a variable alternating electrical voltage across the static and movable diaphragm to initiate vibrations in the movable diaphragm due to variations of the electrostatic forces acting between the layers, thereby serving as a loudspeaker. Such an electrostatic transducer is, for example, disclosed in US7,095,864. The effect at a point in room will depend on the surface area of the diaphragm, which is easily increased. Advantages with an electrostatic transducer, compared to a piezoelectric emitter, is that it is much faster and has a considerably larger frequencies range. As the electrostatic transducer is faster it also has a shorter transient time.

In some applications, it is a desire to be able to generate highly dispersed sound waves, dispersed over 140°, of a large sound pressure level, such as at least 0.2 Pa in each point within the measuring area, at a large distance from the sound source. An example of such an application is position-detecting systems having an ultra sonic transmitter. US5280457 discloses a system for determining the position of a mobile point of interest in a m dimensional coordinate system. The system comprises an ultrasonic transmitter mounted on the point of interest and a plurality of stationary ultrasonic receivers, the number being at least m + 2, and control means for processing the received signals and compute the location of the point of interest. A commonly used ultrasonic transmitter in such applications is a piezoelectric transmitter. A piezoelectric transmitter often sends at its resonant frequency. The dispersion angle for a piezoelectric transmitter, having a resonant frequency above 35kHz is at maximum 110°.

Accordingly, there is a desire to increase the dispersion angle of the electrostatic transducer. It is also a desired to have almost the same intensity is all directions within the dispersion angle. Many solutions to this problem have been proposed during the years. One solution is to provide the transducer with a curved diaphragm. Another solution is to use a cross-over network when designing a multi-speaker system. Line arrays of loudspeakers are often employed to provide increased directivity. Another solution is to use a striped panel loudspeaker. The panel loudspeaker consists of a plurality of individual sound radiating areas in the form of narrow stripes. Each stripe can be driven individually so that the panel radiation pattern can be modified and it can be used as a directivity-controlled sound source in audio applications. A series of electrode rings are fed with delay lines, so each ring responds to the change in current a split second after the previous ring, creating movement in the diaphragm identical to a ripple in the pond.

The trouble with the solutions presented up to now is that they have less dispersion in the vertical plane than in the horizontal plane and that they are not suitable for determining the position of a point in room since the location of the sound source is not well defined.

Thus, it is difficult at high frequencies to generate a sound signal having a high sound pressure level and large dispersion in the vertical plane as well as in the horizontal plane. Both the sound pressure level and the amount of the dispersion of the sound depend on the area of the sound source.

### OBJECTS AND SUMMARY OF THE INVENTION

One object of the present invention is to provide an apparatus for measuring positions in a three dimensional room capable of generating sound waves with a high sound pressure level at a large distance from the sound source and with a large dispersion in the vertical plane as well as in the horizontal plane.

This object is achieved by an apparatus as defined in claim 1.

Such an apparatus comprises: a pointing device for pointing out the positions to be measured, a device for generating sound waves connected to the pointing device, at least three microphones for detecting the sound waves located at a distance from each other in the room, and a computation unit adapted to compute the time it takes for the sound waves to travel between the pointing device and the microphones and on bases thereof determining the position of the pointing device.

Such an apparatus comprises a scattering unit having a surface of a parabolic shape, whereby the sound-wave generator and the scattering unit are arranged such that the generated sound waves are reflected in said parabolic surface. The device further comprises an opening arranged such that the reflected sound waves are allowed to leave the device and be distributed to the surroundings. In order to achieve a high reflection and thereby low losses, the scattering unit should be made of a material having high acoustic impedance, which means that the speed of sound in the material should be large compared to the speed of sound in air. Examples of suitable materials are metals and dense wood.

The device according to the invention includes a separate sound wave generator and a separate scattering unit, which makes the sound pressure level and the dispersion almost independent of each other. The dispersion angle depends on the shape of the parabola, i.e. on parameters in the equation of the parabola, and the sound pressure level depends on the shape of the sound wave generator. Therefore it is possible to produce a device having a high sound pressure level as well as a large dispersion angle.

Due to the parabolic surface, the sound waves are first converged towards the focus of the parabola and then diverged and distributed to the surroundings through the opening. Thus, the location of the sound source is the focus of the parabolic surface, which means that the location the sound source is well defined. Depending on the shape of the parabola, the dispersion angle can be up to 160 degrees, which is enough for many applications. The dispersion in the horizontal and vertical plane will be about the same.

The device is suitable for generating disperse sound waves of a frequency above 2kHz.

According to the invention, the opening is arranged in the vicinity of the focus of the parabolic surface, the sound-wave generator is adapted to generate sound waves having an essentially plane wave front, and the sound-wave generator and the scattering unit are arranged such that the reflected sound waves are gathered at the focus of the parabolic surface before they are distributed to the surroundings. Although it is possible to use a sound-wave generator that generates sound waves having non-plane wave fronts, the resulting dispersion is far from optimal and will not be sufficient for all applications. Due to the fact that plane sound waves are gathered in the focus of the parabola before they are dispersed, a sound-wave generator that generates sound waves with plane wave fronts provides on optimal dispersion, and makes it easy to control the dispersion. With an optimal dispersion is meant an optimal dispersion angle as well as almost the same sound intensity level, in all directions within the dispersion angle.

Another advantage using a parabolic surface for dispersing the sound waves is that all the generated sound passes through a common point, i.e. the focus of the parabola, which means that the time it takes from the sound wave is generated until it reaches the focus is the same for the whole wave front. The whole wave front reaches the focus at the same time. This is important in applications in which the traveling times of the generated waves are measured, for example when a position in the room is measured by means of ultra sound.

According to an embodiment of the invention, the sound-wave generator comprises: a static diaphragm, a movable diaphragm arranged movable relative to the static diaphragm, and a power supply applying a variable alternating electrical voltage across the static and movable diaphragm to initiate vibrations in the movable diaphragm due to variations of the electrostatic forces acting between the diaphragms, and the movable diaphragm is facing the parabolic surface. According to this embodiment, the sound-wave generator is an electrostatic transducer producing plane waves. Such an electrostatic sound-wave generator is easy to build with a large surface area, which means that it is possible to generate a large sound pressure level. Another advantage with this embodiment is that the mass of the diaphragm is small compared with, for example, a piezoelectric transmitter, which causes a short rise and fall time, which is important for position measurements.

According to an embodiment of the invention, the sound-wave generator comprises a layer of an insulating material arranged on a surface of the static diaphragm, which surface is facing the movable diaphragm. In order to achieve as large sound pressure level as possible, the voltage between the static and movable diaphragm should be as close as possible to the electrical strength of the diaphragms. The insulating layer provides an improved electrical strength between the static and movable diaphragms and thereby makes it possible to increase the generated sound pressure level with about 10 times.

According to an embodiment of the invention, the static diaphragm comprises a plurality of protrusions extending towards the movable diaphragm. The protrusions are distributed over the surface of the static diaphragm, which faces the movable diaphragm. Preferably, the protrusions are evenly distributed over the surface of the static diaphragm. If the electrical strength of the diaphragms is very high, there is a risk that the mechanical stress in the movable diaphragm becomes to high and the diaphragm is stretched and bent such that it will come into contact with the static membrane. If this happens the sound generator will stop functioning. By the introduction of protrusions on the surface of the static diaphragm, which faces the movable diaphragm, the bending of the diaphragm is reduced and with that the risk for contact between the movable and static diaphragm is reduced. Measurements have shown that it is possible to increase the sound pressure level about three times with a static diaphragm having protrusions.

According to an embodiment of the invention, the opening is provided in the scattering unit. Thus, it is possible to utilize a larger area of the sound-wave generator and accordingly to increase the effect of the sound-wave generator. In order to provide a good dispersion, the focus of the parabolic surface preferably should be located at the opening or in front of the opening at the outside of the scattering unit.

According to an embodiment of the invention, the scattering unit is truncated along a plane, which is parallel to the symmetric line of the parabolic surface and the opening is located the truncated part the scattering unit. For example, the scattering unit is shaped as a half parabola or less than a half parabola. This embodiment facilitates the manufacturing process.

According to an embodiment of the invention, the sound-wave generator is adapted to produce ultra sound, i.e. sound-waves having a frequency between 20kHz and 70kHz.

An industrial robot is programmed to carry out work along an operating path. In order to program or teach the robot the work, the robot is manipulated to positions along the desired operating path. These positions are stored as instructions in a memory in the control unit. To avoid the trouble to move the robot to the desired positions, the positions on the desired path can be measured with a position-measuring device. A device according to the invention is suitable for measuring positions in a room, and in particularly suitable for measuring the position of a point in a room in connection with programming of an industrial robot.

### BRIEF DESCRIPTION OF THE DRAWINGS

The invention will now be explained more closely by the description of different embodiments of the invention and with reference to the appended figures.
- Fig. 1: shows a device for producing dispersed sound waves according to a first embodiment of the invention.
- Fig. 2: is a perspective view of a device for producing dispersed sound waves according to a second embodiment of the invention.
- Fig. 3: shows the device in figure 2 in a view from above.
- Fig. 4: shows a sectional view along a line A-A in figure 2.
- Fig. 5: shows in more detail a sound-wave generator of the device according an embodiment of the invention.
- Fig. 6a: shows a view from above of a static diaphragm of the sound wave generator shown in figure 5.
- Fig. 6b: shows the movable diaphragm resting on protrusions of the static diaphragm of the sound wave generator when a high potential is applied between the diaphragms.
- Fig. 7: shows schematically an apparatus for measuring positions in a room according to an embodiment of the invention.
- Fig. 8: shows an example of an output signal generated by a device according to the invention in response to an alternating voltage signal and the output signal detected at a distance from the device.

### DETAILED DESCRIPTION OF PREFERRED EMBODIMENTS OF THE INVENTION

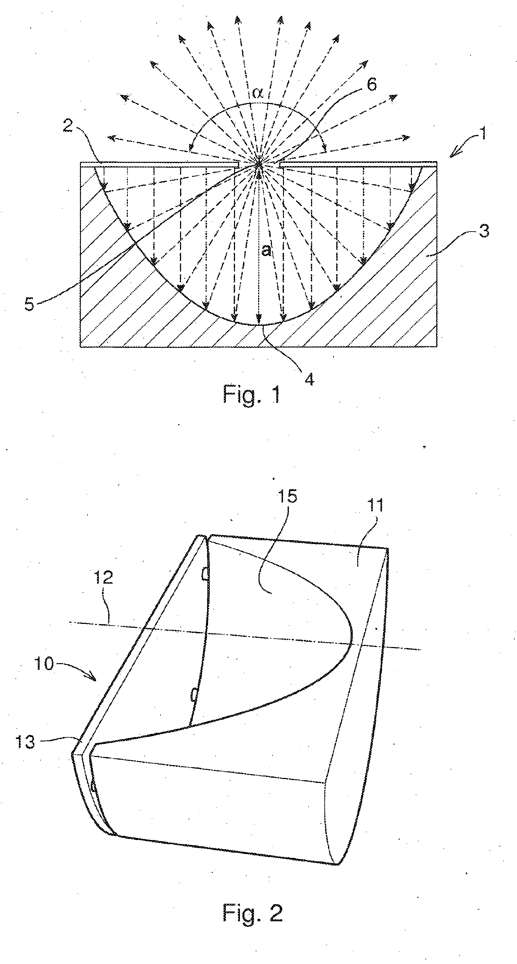

Figure 1 shows a device 1 for producing dispersed sound-waves according to a first embodiment of the invention. The device comprises a sound-wave generator 2 for producing and emitting sound waves. In this embodiment the sound-wave generator is an electrostatic transmitter. The device further comprises a scattering unit 3 having a surface 4 of a parabolic shape. The sound-wave generator 2 and the scattering unit 3 are arranged such that the generated sound waves are reflected in the parabolic surface 4 and gather at a focus 5 of the parabolic surface. In this embodiment, the sound-wave generator 2 is provided with an opening 6 arranged such that reflected sound waves are allowed to leave the device and be distributed to the surroundings.

The shape of the parabolic surface is chosen such that its focus is located at or in the close vicinity of the opening 6. The sound-wave generator 2 is disc shaped and has a two-dimensional extension in a direction perpendicular to the symmetric axis of the parabolic surface. The sound wave generator is arranged opposite the parabolic surface of the scattering unit such that the generated sound waves are directed in parallel to the symmetric axis of the parabolic surface. In order to achieve as large high sound pressure level as possible, the area of the sound-wave generator shall be as large as possible. The sound-wave generator is adapted to generate sound-waves having an essentially plan wave front, which means that the waves produced over the entire area of the generator are essentially parallel, as shown in the figure. The scattering unit is cup-shaped. In this embodiment the dispersion angle α is about 160 degrees.

The scattering is controlled by the value of a parameter a in the equation of the parabola, which is the distance from the lowest part of the parabola to the focus of the parabola. The equation of the parabola is (y-y₀)² = 4a(x-x₀).

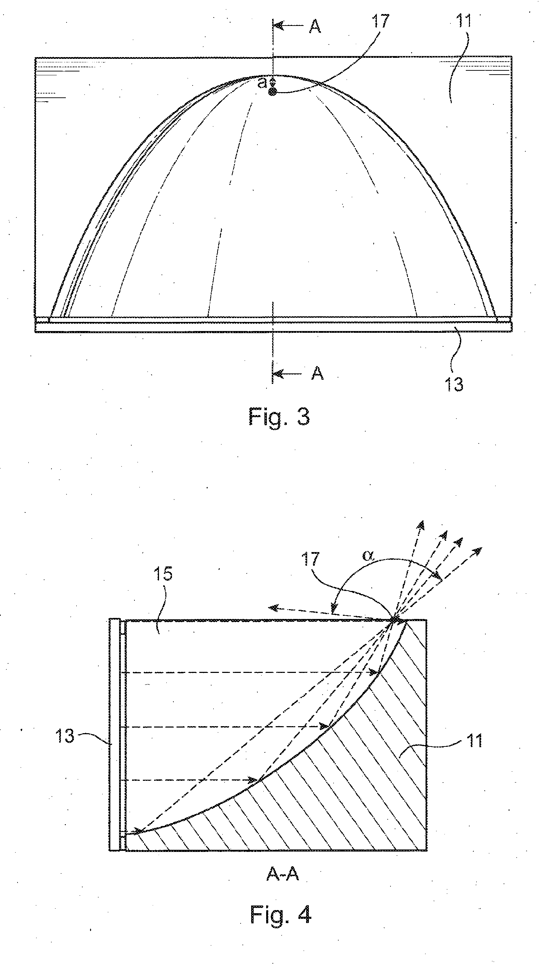

Figures 2-4 show a device 10 for producing dispersed sound-waves according to a second embodiment of the invention. The device 10 includes a scattering unit 11, which is truncated along a plan parallel to the symmetric line 12 of the parabolic surface. The scattering unit 11 is shaped as a half parabola. Thus, the scattering unit 11 is a half of the scattering unit 3 shown in figure 1. The device further includes a sound-wave generator 13 arranged with its sound-generating surface opposite the parabolic surface of the scattering unit 11. In this embodiment, the sound-wave generator is solid and not provided with an opening, as in the previous embodiment. Instead, the scattering unit 11 is provided with an opening 15. The dispersion of the sound is controlled by the size of the area of the sound generator and the distance a in the equation of the parabola. For example, to achieve a large scattering angle, the shape of the parabola should be such that focus 17 is located close to the bottom of the parabola, as shown in figure 3, and also close to the opening 15, as shown in figure 4.

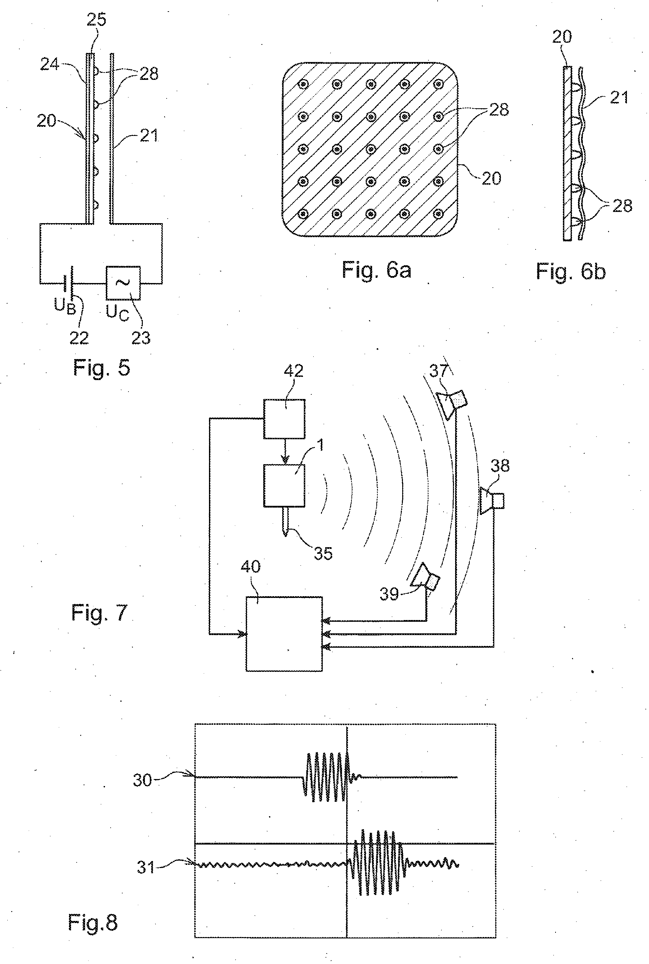

Figure 5 shows in more detail the sound-wave generator 2 and 13. This generator works according to the electrostatic principle and is also denoted an electrostatic loud speaker. There exist different types of electrostatic load speakers, for example single ended and symmetrical electrostatic load speakers. The principles of electrostatic loud speakers are for example described in the book "Electrostatic loud speaker designed and construction" written by Ronald Wagner 1993, ISBN 0-9624-191-6-8. Pages of Interest are, for example, page 63-71.

The scattering unit is suitable to use together with any type of known electrostatic sound generator. Figure 5 shows a new designed of an electrostatic sound generator, which has been proven to increase the sound pressure level. The sound generator of figure 5 comprises a static diaphragm 20 and a movable diaphragm 21, arranged movable relative to the static diaphragm, and a power supply unit 22, 23 applying a variable alternating electrical voltage U_{B} + U_{C} across the static and movable diaphragms to initiate vibrations in the movable diaphragm due to variations of the electrostatic forces acting between the diaphragms. The power supply unit comprises a bias supply 22 and an alternating ac voltage supply 23.The movable diaphragm 21 is facing the parabolic surface of the scattering unit.

The static diaphragm 20 comprises a plate 24 of a metal, for example copper or aluminum. The plate 24 is covered with a layer of an insulating material 25. The insulating layer 25 is arranged on the surface the static diaphragm, which is facing the movable diaphragm. Preferably, the material of the isolating layer 25 is applied as a liquid, for example a silicon resin, which is sprayed on the surface of the static diaphragm. The movable diaphragm 21 is, for example, made of pure metal, or a plastic material with a layer of metal applied on it. The metal is preferably nickel or stainless steel, and the metal layer on the plastic is, for example, aluminum or gold. The distance between the static and movable diaphragm is preferably as small as possible in order to achieve as large sound pressure level as possible.

Further, in order to achieve as large sound pressure level as possible, the voltage U_{B} is to be close to the electrical strength limit for the material of the movable diaphragm. The isolating layer 25 considerably increases the electrical strength of the static diaphragm. However, if the strength is very large, there is a risk that the mechanical tension in the movable diaphragm becomes so large, when it is stretched, and bends so much that the movable diaphragm will come into contact with the static diaphragm. If this happens the sound wave generator will stop functioning. In order to avoid this problem, a plurality of protrusions 28 is provided on the surface of the static diaphragm 20, which surface faces the movable diaphragm. The protrusions 28 are arranged such that they are extending towards the movable diaphragm 21. The protrusions, arranged between the diaphragms limit the bending of the movable diaphragm and thereby reduce the risk for contact between the diaphragms.

The area of the protrusions should be minimized, to avoid reducing the effective sending area of the generator. One way to achieve a small area is to integrate the protrusions in the static diaphragm. The integration is, for example, made by an electrolytic process in which the areas, as well as the heights of the protrusions, are carefully controlled. Figure 6a shows the static diaphragm 20 seen from above. The height of the protrusion is between 100-300 µm, typically 200 µm. Figure 6b shows the movable diaphragm 21 resting on the protrusions 28 of the static diaphragm 20, when a high potential U_{B} + U_{C} is applied between the diaphragms. When electric voltage is applied between the static and the movable diaphragm, the movable diaphragm is moved and an acoustic signal is emitted from the generator. The voltage U_{c} is, for example, generated by a transformer.

The area of the sound-wave generator, i.e. the area of the static and movable diaphragm, and the location of the focus of the parabola determined the dispersion of the sound waves. The theoretical limit is 180 degrees, however in practice it is possible to achieve 160 degrees as a maximum. By choosing the shape of the parabola, and thereby the distance between the bottom part of the parabola and the focus, the dispersion of the sound can be chosen as large or small. The area of the sound-wave generator, i.e. the area of diaphragms, influences the dispersion such that if the area is smaller than the opening of the parabola, it is not possible to utilize all the possibilities of the parabola. In order to achieve a plane wave front of the sound, it is important that the area of the sound-wave generator is large in relation to the wavelength of the emitted sound wave. The parabola and the sound-wave generator will then function optimally and the dispersion of the sound, within reasonable limits, can be calculated.

Figure 7 shows the change of the potential U_{B} + U_{C} between the diaphragms 20, 21 and the sound-wave signal generated in response to the change in the applied voltage 31. The signal 30 is the electrical signal connected to the sound generator and the signal 31 is the acoustic signal detected by the microphone. As seen from the figure the response time is small which means that the response is fast and the sound generator can work with fast transients. In relation to most piece of electric sound generator, the building up process is very short. This means that the technique using burst measurements, which is often used by the electric sound generators used for measuring distances, is no longer needed. By utilizing the fastness of the sound generator it is possible to use a first half period of the signal for measuring of distances. The technical possibilities will thereby be considerably increased. By means of integrated protrusions, the parabola and electrostatic sound generator it is possible to increase the accuracy and extend the measuring area position measurements.

Figure 7 shows an apparatus for measuring positions in a room according to an embodiment of the invention. The apparatus comprises a pointing device 35 including a tip for pointing out the positions to be measured, a device 1 according to the invention for generating sound-waves, which is connected to the pointing device, at least three microphones 37, 38, 39 for detecting the sound-waves located at a distance from each other in the room, and a computation unit 40 adapted to compute the time it takes for the sound-waves to travel from the pointing device 35 to the microphones, and on basis thereof determining the position of the tip of the pointing device. The apparatus further comprises a start signal generator 42, which generates a start signal for the measurement upon activation of a user. The start signal is transferred to the device 1 for generating sound waves and to the computation unit 40. The sound-wave generator generates ultra sound pulses.

The microphones are positioned in such a way that a three dimensional room is created. The microphones are, for example, of capacitor type. The area of a microphone of capacitor type is small in relation to conventional microphones. Preferably, the microphones are acoustically damped for frequencies below 40 kHz, and their upper frequency is above 100 kHz. The computation unit 40 receives signals from the microphones 37-39 and the start signal from the start signal generator 42. The computation unit 40 calculates the time difference between the start signal and the signals received by the microphones and based thereon calculates the position of the pointing device in the room.

The microphones are connected to the computation unit, which for example is a personal computer. The start signal is a synchronization signal, which is transferred to the computation unit, for example, via a cable or as a light signal. The synchronization signal is sent at the same time as a sound pulse is generated. By determining the time it takes for the sound pulse to reach each of the microphones, which registers the sound pulse, the position of the tip of the pointing device in the room can be determined in three dimensions. The position of the microphones in the room has to be known to make it possible to determine the position of the pointing device.

According to an embodiment of the invention, the apparatus may include two or more devices for generating sound waves located at a distance from each other. By using two or more sound-wave generators it is possible to determine the direction of the pointing device, as well as the position of the tip of the pointing device. For example, the apparatus can be provided with three devices for generating sound-waves which are positioned in such a way that they create a coordinate system wherein the position for each of their devices are determined at the same time. This means that not only the position of the pointing device, but also the orientation of the pointing device can be determined. Such a device is, for example, useful during robot programming in order to determine the positions and orientations of a tool at points on a robot path.

Figure 8 shows a sound pulse 30 generated by the device 1 and the same sound pulse 31 detected by one of the microphones 37-39. As seen from the figure, the building up process is fast.

The present invention is not limited to the embodiments disclosed but may be varied and modified within the scope of the following claims. For example, the designed of the scattering unit and the sound wave generator can be varied in many other ways.

## Claims

1. An apparatus for measuring positions in a three dimensional room comprising:
- a pointing device (35) for pointing out the positions to be measured, and including a sound-wave generator (2;13) for producing and emitting sound waves,
- at least three microphones (37-39) for detecting the sound waves, and located at a distance from each other in the room,
- a computation unit (40) adapted to compute the time it takes for the sound waves to travel between the pointing device and the microphones and on bases thereof determining the position of the pointing device, **characterized in that** the sound-wave generator is adapted to generate sound-waves having an essentially plane wave front, and the pointing device comprises a scattering unit (3;11) arranged opposite the sound-wave generator, and having an surface (4) of a parabolic shape arranged such that the generated sound waves are reflected in the parabolic surface and gathered at focus of the parabolic surface, and an opening (6;15) arranged such that the reflected sound waves are allowed to leave the device and be distributed to the surroundings, and the shape of the parabolic surface is such that its focus is located at or in close vicinity to the opening.

2. The apparatus according to claim 1, wherein said sound-wave generator comprises:
a static diaphragm (20),
a movable diaphragm (21) arranged movable relative to the static diaphragm, and
a power supply (23) applying a variable alternating electrical voltage across the static and movable diaphragm to initiate vibrations in the movable diaphragm due to variations of the electrostatic forces acting between the diaphragms, and the movable diaphragm is facing said parabolic surface (4).

3. The apparatus according to claim 2, wherein said static diaphragm (20) comprises a plurality of protrusions (28) extending towards the movable diaphragm (21).

4. The apparatus according to claim 3 or 4, wherein said sound-wave generator comprises a layer (25) of an insulating material arranged on a surface of said static diaphragm (20), which surface is facing said movable diaphragm.

5. The apparatus according to any of the previous claims, wherein said opening (15) is provided in the scattering unit (11).

6. The apparatus according to any of the previous claims, wherein said the scattering unit (11) is truncated along a plane, which is parallel to the symmetric line (12) of the parabolic surface.

7. The apparatus according to any of the previous claims, wherein the sound-wave generator is adapted to produce ultra sound.

8. Use of the apparatus according to any of the claims 1-7, for measuring the position of a point in a room in connection with programming of an industrial robot.

## Patentansprüche

1. Gerät zum Messen von Positionen in einem dreidimensionalen Raum, umfassend:
- eine Zeigevorrichtung (35) zum Aufzeigen der zu messenden Positionen, die einen Schallwellengenerator (2; 13) zum Erzeugen und Emittieren von Schallwellen umfasst,
- wenigstens drei Mikrofone (37 - 39) zum Erkennen der Schallwellen, die sich in einem Abstand voneinander in dem Raum befinden,
- eine Recheneinheit (40), die dazu eingerichtet ist, die Zeit zu berechnen, die die Schallwellen benötigen, um sich zwischen der Zeigevorrichtung und den Mikrophonen zu bewegen, und darauf beruhend die Position der Zeigevorrichtung zu bestimmen, **dadurch gekennzeichnet, dass** der Schallwellengenerator dazu eingerichtet ist, Schallwellen mit einer im Wesentlichen ebenen Wellenfront zu erzeugen, und die Zeigevorrichtung eine Streueinheit (3; 11) aufweist, die dem Schallwellengenerator gegenüberliegend angeordnet ist und eine Fläche (4) von parabolischer Form aufweist, welche so angeordnet ist, dass die erzeugten Schallwellen in der parabolischen Fläche zurückgestrahlt und in dem Brennpunkt der parabolischen Fläche gesammelt werden, und eine Öffnung (6; 15) aufweist, die so angeordnet ist, dass den zurückgestrahlten Schallwellen gestattet wird, die Vorrichtung zu verlassen und in die Umgebung verteilt zu werden, wobei die Form der parabolischen Fläche derart ist, dass sich ihr Brennpunkt an der Öffnung oder in unmittelbarer Nähe dazu befindet.

2. Gerät nach Anspruch 1, wobei der Schallwellengenerator Folgendes umfasst:
- eine statische Membran (20),
- eine bewegliche Membran (21), die in Bezug auf die statische Membran beweglich angeordnet ist, und
- eine Leistungsversorgung (23), die eine variable elektrische Wechselspannung über die statische und die bewegliche Membran anlegt, um in der beweglichen Membran infolge von Schwankungen der elektrostatischen Kräfte, die zwischen den Membranen wirken, Schwingungen auszulösen, wobei die bewegliche Membran zu der parabolischen Fläche (4) gerichtet ist.

3. Gerät nach Anspruch 2, wobei die statische Membran (20) mehrere Vorsprünge (28) umfasst, die sich in Richtung der beweglichen Membran (21) erstrecken.

4. Gerät nach Anspruch 3 oder 4, wobei der Schallwellengenerator eine Schicht (25) aus einem Isoliermaterial umfasst, die an einer Fläche der statischen Membran (20) angeordnet ist, wobei diese Fläche zu der beweglichen Membran gerichtet ist.

5. Gerät nach einem der vorhergehenden Ansprüche, wobei die Öffnung (15) in der Streueinheit (11) bereitgestellt ist.

6. Streueinheit (11) entlang einer Ebene, die parallel zu der Symmetrielinie (12) der parabolischen Fläche verläuft, abgeschnitten ist.

7. Gerät nach einem der vorhergehenden Ansprüche, wobei der Schallwellengenerator dau eingerichtet ist, Ultraschall zu erzeugen.

8. Verwendung des Gerätes nach einem der Ansprüche 1 bis 7 zum Messen der Position eines Punktes in einem Raum in Verbindung mit dem Programmieren eines Industrieroboters.

## Revendications

1. Système de mesure de positions dans un espace en trois dimensions comprenant :
- un dispositif (35) de visée pour viser les positions à mesurer et comprenant un générateur (2, 13) d'ondes acoustiques pour produire et émettre des ondes acoustiques,
- au moins trois microphones (37 à 39) pour détecter les ondes acoustiques et placés à distance les uns des autres dans l'espace,
- une unité (40) de calcul, conçue pour calculer le temps pris par les ondes acoustiques pour se propager entre le dispositif de visée et les microphones et, sur la base de celui-ci, pour déterminer la position du dispositif de visée, **caractérisé en ce que** le générateur d'ondes acoustiques est conçu pour produire des ondes acoustiques ayant un front d'onde sensiblement plan et le dispositif de visée comprend une unité (3, 11) de dispersion, disposée en opposition au générateur d'ondes acoustiques et ayant une surface (4) de forme parabolique agencée de manière à ce que les ondes acoustiques produites soient réfléchies par la surface parabolique et se réunissent à un foyer de la surface parabolique et une ouverture (6, 15) agencée de manière à ce que les ondes acoustiques réfléchies puissent quitter le dispositif et être réparties à l'entour et la forme de la surface parabolique est telle que son foyer est à l'ouverture ou à proximité immédiate de l'ouverture.

2. Système suivant la revendication 1, dans lequel le générateur d'ondes acoustiques comprend :
un diaphragme (20) statique,
un diaphragme (21) mobile, qui est mobile par rapport au diaphragme statique et
une alimentation (23) en courant appliquant une tension électrique alternative variable aux bornes du diaphragme statique et mobile pour provoquer des vibrations du diaphragme mobile en raison des variations des forces électrostatiques agissant entre les diaphragmes et le diaphragme mobile fait face à la surface (4) parabolique.

3. Système suivant la revendication 2, dans lequel le diaphragme (20) statique comprend une pluralité de protubérances (28) s'étendant en direction du diaphragme (21) mobile.

4. Système suivant la revendication 3 ou 4, dans lequel le générateur d'ondes acoustiques comprend une couche (25) en un matériau isolant, disposée sur une surface du diaphragme (20) statique, cette surface faisant face au diaphragme mobile.

5. Système suivant l'une quelconque des revendications précédentes, dans lequel l'ouverture (15) est prévue dans l'unité (11) de dispersion.

6. Système suivant l'une quelconque des revendications précédentes, dans lequel l'unité (11) de dispersion est tronquée le long d'un plan qui est parallèle à l'axe (12) de symétrie de la surface parabolique.

7. Système suivant l'une quelconque des revendications précédentes, dans lequel le générateur d'ondes acoustiques est conçu pour produire des ultrasons.

8. Utilisation du système suivant l'une quelconque des revendications 1 à 7, pour mesurer la position d'un point dans un espace en liaison avec une programmation d'un robot industriel.
